**Europäisches Patentamt**

**European Patent Office**

**Office européen des brevets**

(19)

(11) Veröffentlichungsnummer: **0 295 201 B1**

(12) **EUROPÄISCHE PATENTSCHRIFT**

(45) Veröffentlichungstag der Patentschrift: **25.04.90**

(21) Anmeldenummer: **88810277.9**

(22) Anmeldetag: **29.04.88**

(51) Int. Cl.⁴: **F16B 13/06**

(54) Spreizdübel mit begrenzter Spreizung.

(30) Priorität: **09.06.87 DE 3719164**

(43) Veröffentlichungstag der Anmeldung:
**14.12.88 Patentblatt 88/50**

(45) Bekanntmachung des Hinweises auf die Patenterteilung:
**25.04.90 Patentblatt 90/17**

(84) Benannte Vertragsstaaten:
**AT BE CH DE ES FR GB IT LI NL SE**

(56) Entgegenhaltungen:
**EP-A- 0 067 751**
**AT-B- 328 231**
**CH-A- 483 571**
**DE-A- 2 150 572**
**GB-A- 2 139 726**

(73) Patentinhaber: **HILTI Aktiengesellschaft,
FL-9494 Schaan(LI)**

(72) Erfinder: **Froehlich, Peter, Lerchenweg 7,
D-8027 Neuried(DE)**

(74) Vertreter: **Wildi, Roland, Hilti Aktiengesellschaft
Patentabteilung, FL-9494 Schaan(LI)**

ACTORUM AG

**Beschreibung**

Die Erfindung betrifft einen Spreizdübel mit einer einen vom vorderen Ende her längsgeschlitzten Bereich aufweisenden Spreizhülse und einem vom vorderen Ende her in diesen Bereich einziehbaren, kegelstumpfförmigen Spreizkörper, wobei die Spreizhülse eine ihre Länge durchsetzende Bohrung aufweist, die sich innerhalb des geschlitzten Bereiches entsprechend dem Spreizkörper zum vorderen Ende hin konisch erweitert.

Spreizdübel der genannten, beispielsweise aus der DE-C 2 536 137 bekannten Art weisen im Einsatz ein Nachspreizverhalten auf und werden vor allem im mittleren und oberen Lastbereich eingesetzt. Für bestimmte Anwendungen, wie beispielsweise Befestigungen in der rissanfälligen Zugzone eines Bauwerkes, können diese Dübel jedoch nicht ohne weiteres verwendet werden. Falls ein Riss direkt durch das Bohrloch verläuft, kann dieser bei der Nachspreizung des Dübels so stark aufgeweitet werden, dass der Verankerungswert des Dübels stark absinkt. Im Extremfall kann dieses Ueberspreizen des Dübels auch zu Abplatzungen oder Zerstörungen des Bauwerkes und dadurch zu einem Ausfall des Dübels führen.

Der Erfindung liegt die Aufgabe zugrunde, einen Spreizdübel zu schaffen, der ein begrenztes Nachspreizverhalten aufweist.

Gemäss der Erfindung wird dies dadurch erreicht, dass sich innerhalb des geschlitzten Bereiches, anschliessend an die konische Erweiterung zum rückwärtigen Ende hin ein zylindrischer Bohrungsbereich anschliesst, dessen Durchmesser dem kleinsten Durchmesser der konischen Erweiterung entspricht und den Durchmesser des verbleibenden rückwärtigen Teiles der Bohrung der Spreizhülse übersteigt.

Solange sich der Spreizkörper in dem sich konisch erweiternden Bereich der Bohrung der Spreizhülse befindet, erfolgt bei Zugbelastung eine relativ starke Aufweitung der Spreizhülse. Durch die, derjenigen des Spreizkörpers entsprechende Konizität des sich erweiternden Bereiches erfolgt diese Aufweitung der Spreizhülse etwa parallel zur Längsachse des Spreizdübels. Gelangt der Spreizkörper in den zylindrischen Bohrungsbereich der Spreizhülse, so erfolgt zwar bei Zugbelastung am Spreizkörper auch eine Nachspreizung der Spreizhülse. Diese ist jedoch geringer, als wenn sich der Spreizkörper im sich erweiternden Bereich der Spreizhülse befindet. Beim Vorspreizen des Dübels macht sich dies auch durch ein geringeres Ansteigen der aufzubringenden Zugkraft, bzw des aufzubringenden Drehmomentes bemerkbar. Der Nachspreizweg ist durch die axiale Länge des zylindrischen Bereiches begrenzt.

Um eine definierte Endlage des Spreizkörpers und somit einen definierten maximalen Spreizzustand des Spreizdübels zu erreichen, ist es zweckmässig, den Uebergang vom zylindrischen Bohrungsbereich zum verbleibenden rückwärtigen Teil der Bohrung der Spreizhülse als Anschlagschulter für den Spreizkörper auszubilden. Falls der Spreizkörper bereits beim Vorspreizen an der Anschlagschulter aufläuft, so macht sich dies durch ein plötzliches starkes Ansteigen der aufzubringenden Vorspannkraft bemerkbar. Durch teilweise Verformbarkeit der Anschlagschulter kann eine Ueberbeanspruchung des Spreizdübels vermieden werden.

Vorteilhafterweise verläuft die Anschlagschulter im wesentlichen senkrecht zur Dübellängsachse, so dass eine plane Auflauffläche für den Spreizkörper entsteht. Somit wird der beim Auflaufen des Spreizkörpers an der Anschlagschulter auftretende Axialdruck gleichmässig über den Umfang der rückwärtigen Stirnseite des Spreizkörpers verteilt.

Die Anschlagschulter ist zweckmässigerweise konkav gekrümmt ausgebildet. Dies ermöglicht am Ende des Nachspreizvorganges ein sanftes Auflaufen des Spreizkörpers an der Anschlagschulter. Der Spreizkörper gleitet somit über die konkav gekrümmt ausgebildete Anschlagschulter und wird dabei gleichzeitig zentriert. Bei scharfkantig ausgebildetem Spreizkörper erfolgt dabei zunächst nur eine Linienberührung zwischen dem Spreizkörper und der Anschlagschulter. Durch Verformung des Spreizkörpers einerseits und der Anschlagschulter andererseits entsteht jedoch mit der Zeit eine flächige Auflage des Spreizkörpers an der Spreizhülse in axialer Richtung. Die Krümmung der Anschlagschulter kann konstant oder veränderlich sein, wobei vorzugsweise der Krümmungsradius in Richtung des rückwärtigen Endes der Spreizhülse abnimmt.

Eine weitere vorteilhafte Ausführung besteht darin, dass die Anschlagschulter zur Dübellängsachse geneigt verläuft. Diese Neigung der Anschlagschulter kann zum vorderen oder zum rückwärtigen Ende der Spreizhülse gerichtet sein. Durch eine zum vorderen Ende der Spreizhülse gerichtete Neigung entsteht eine kegelige Ansenkung nach Art eines Ventilsitzes. Ist die Neigung der Anschlagschulter gegen das rückwärtige Ende der Spreizhülse gerichtet, so entsteht an der Anschlagschulter ein ringförmiger Vorsprung, welcher beim Auflaufen des Spreizkörpers verformt werden kann. Eine solche Verformungszone verhindert eine Ueberbeanspruchung des Dübels.

Zweckmässigerweise entspricht die Länge der konischen Erweiterung der Spreizhülse im wesentlichen der Länge des kegelstumpfförmigen Spreizkörpers. Durch eine solche Dimensionierung befindet sich der Spreizkörper am Ende der ersten Spreizphase im Bereich der konischen Erweiterung vollständig in der Spreizhülse. Beim weiteren Einziehen des Spreizkörpers in die Spreizhülse ist dann der vorderste Teil der Spreizhülse nicht mehr im Bereich des Spreizkörpers und kann sich somit etwas zurückverformen. Somit wird das weitere Einziehen des Spreizkörpers in der zweiten Phase erleichtert.

Ferner entspricht vorteilhafterweise die Länge des zylindrischen Bohrungsbereiches im wesentlichen der Länge des kegelstumpfförmigen Spreizkörpers. Wenn der Spreizkörper am rückwärtigen Ende des zylindrischen Bohrungsbereiches zur Anlage kommt, befindet er sich somit vollständig im zylindrischen Bohrungsbereich und ausserhalb der konischen Erweiterung der Spreizhülse. Die maximale Aufweitung der Spreizhülse befindet sich somit im Uebergangsbereich zwischen der konischen Erweiterung und dem zylindrischen Bohrungsbereich. Dies ergibt eine gute, gleichmässige Verteilung des Spreizdruckes im Bohrloch und verhindert Ueberbelastungen des Aufnahmematerials.

Die Erfindung soll nachstehend anhand der sie beispielsweise wiedergebenden Zeichnungen näher erläutert werden. Es zeigen:

Fig. 1 einen erfindungsgemässen Spreizdübel, in ungespreiztem Zustand,

Fig. 2 den Spreizdübel gemäss Fig. 1, in teilweise gespreiztem Zustand,

Fig. 3 den Spreizdübel gemäss Fig. 1 und 2, in maximal gespreiztem Zustand,

Fig. 4 eine Belastungscharakeristik des erfindungsgemässen Dübels gemäss Fig. 1 bis 3,

Fig. 5 eine andere Spreizhülse eines erfindungsgemässen Dübels,

Fig. 6 eine weitere Spreizhülse eines erfindungsgemässen Dübels.

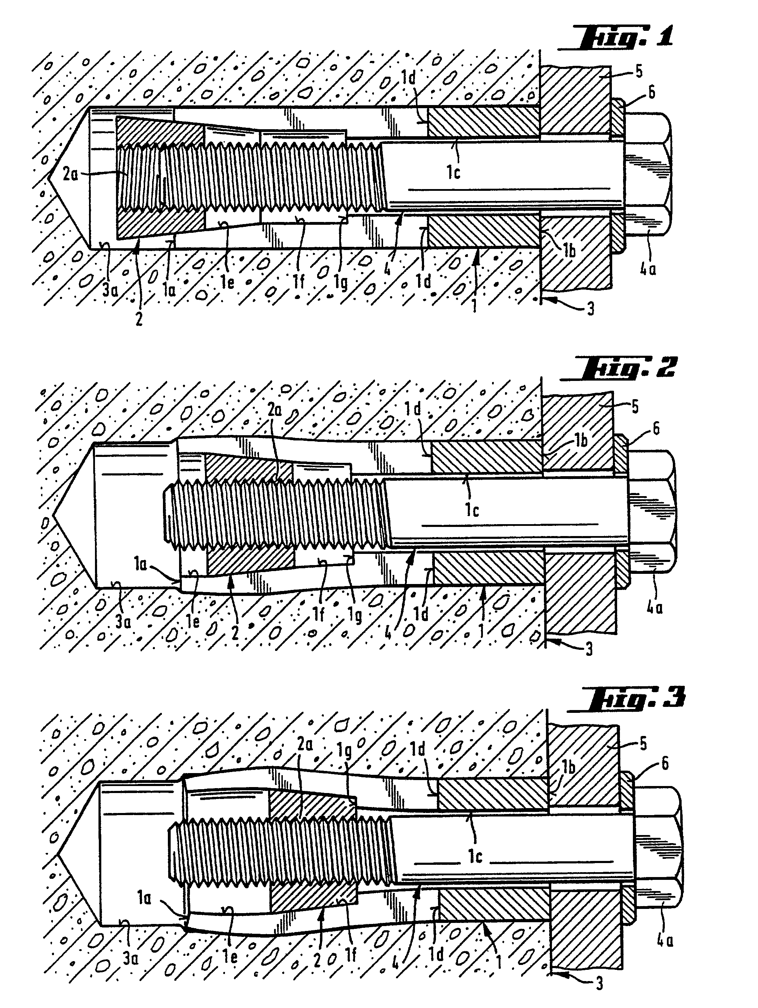

Der aus den Fig. 1 bis 3 ersichtliche, erfindungsgemässe Spreizdübel besteht im wesentlichen aus einer insgesamt mit 1 bezeichneten Spreizhülse mit einem vorderen Ende 1a und einem rückwärtigen Ende 1b sowie einer in das vordere Ende 1a der Spreizhülse 1 einziehbaren, insgesamt mit 2 bezeichneten Spreizkörper. Die Spreizhülse 1 weist eine durchgehende Bohrung 1c sowie vom vorderen Ende 1a ausgehende, sich über einen Teil der Länge der Spreizhülse 1 erstreckende Längsschlitze 1d auf. Der vorderste Teil der Bohrung 1c ist als konische Erweiterung 1e mit sich gegen das vordere Ende 1a vergrösserndem Durchmesser ausgebildet. Zum rückwärtigen Ende 1b hin schliesst sich an die konische Erweiterung 1e ein zylindrischer Bohrungsbereich 1f an, dessen Durchmesser dem kleinsten Durchmesser der konischen Erweiterung 1e entspricht. Der zylindrische Bohrungsbereich 1f übersteigt jedoch den Durchmesser der Bohrung 1c der Spreizhülse 1, so dass am rückwärtigen Ende des zylindrischen Bohrungsbereiches 1f eine Anschlagschulter 1g gebildet wird. Die Spreizhülse 1 ist in ein Bohrloch 3a eines insgesamt mit 3 bezeichneten Aufnahmematerials eingesetzt. Nach dem Einsetzen des Spreizdübels in das Aufnahmematerial 3 ist eine insgesamt mit 4 bezeichnete Schraube durch ein zu befestigendes Bauteil 5 hindurch in die Spreizhülse 1 eingeführt und in ein Innengewinde 2a des Spreizkörpers 2 eingeschraubt. Zwischen einem Kopf 4a der Schraube 4 und dem zu befestigenden Bauteil 5 ist eine Unterlagscheibe 6 angeordnet. Durch Aufbringen eines Drehmomentes am Kopf 4a der Schraube 4 kann der Spreizkörper 2 in die Spreizhülse 1 eingezogen und der Spreizdübel somit vorgespreizt werden. Bei nachfolgender Belastung an Kopf 4a der Schraube 4 erfolgt eine Nachspreizung des Dübels.

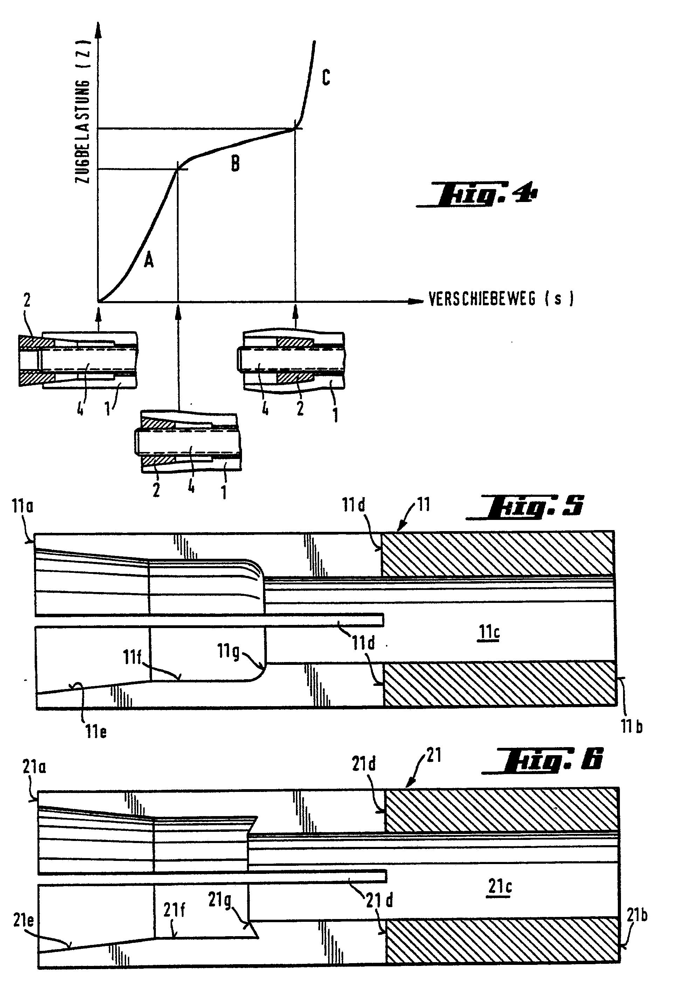

In Fig. 2 ist der Spreizkörper 2 bis an das rückwärtige Ende der konischen Erweiterung 1e in die Spreizhülse 1 eingezogen worden. Tritt nun an der Schraube 4 eine zusätzliche Belastung auf, so wird der Spreizkörper 2 auch in den zylindrischen Bohrungsbereich 1f hineingezogen. Das Ende dieses Vorganges ist in Fig. 3 dargestellt. Dabei ist das rückwärtige Endes des Spreizkörpers 2 an der Anschlagschulter 1g aufgelaufen. Somit ist die maximal mögliche radiale Aufweitbarkeit der Spreizhülse 1 erreicht. Bei weiterer Zugbelastung der Schraube 4 kann nur noch die Anschlagschulter 1g verformt werden.

Fig. 4 zeigt den Verlauf des Verschiebeweges s in Abhängigkeit von der aufgebrachten Zugbelastung Z. Wie das Diagramm zeigt, ist der Verschiebeweg etwa proportional zur Zugbelastung, solange sich der Spreizkörper im Bereich der konischen Erweiterung befindet (Teil A der Kurve). Gelangt der Spreizkörper in den zylindrischen Bohrungsbereich, so wird mit geringer zusätzlicher Belastung ein wesentlich grösserer Verschiebeweg erreicht (Teil B der Kurve). Gelangt der Spreizkörper dann an der Anschlagschulter zur Anlage, so erfolgt nochmals ein starker Anstieg der aufzubringenden Belastung (Teil C der Kurve). Dieser Anstieg ist beim Spreizen des Dübels deutlich spürbar.

Fig. 5 und 6 zeigen weitere, insgesamt mit 11 und 21 bezeichnete Spreizhülsen. Diese unterscheiden sich von der in Fig. 1 bis 3 dargestellten Ausführung nur durch die Ausbildung der Anschlagschulter. Entsprechende Bezugsziffern sind um zehn bzw zwanzig erhöht. Die in Fig. 5 dargestellte Anschlagschulter 11g ist konkav gekrümmt ausgebildet. Durch eine solche Ausbildung der Anschlagschulter 11g kann das Auflaufen des Spreizkörpers 2 an der Anschlagschulter 11g beispielsweise so gesteuert werden, dass es nicht wie bei der im wesentlichen senkrecht zur Dübellängsachse verlaufenden Anschlagschulter 1g hart und plötzlich, sondern weich und allmählich erfolgt. Der Krümmungsradius der Anschlagschulter 11g kann im gesamten Bereich konstant bleiben oder sich verändern.

Bei der in Fig. 6 dargestellten, insgesamt mit 21 bezeichneten Spreizhülse verläuft die Anschlagschulter 21g zur Dübellängsachse geneigt. Die Neigung der Anschlagschulter 21g ist so gerichtet, dass dadurch eine Art Hinterschnitt, bzw ein Vorsprung gebildet wird. Dieser Vorsprung kann beim Auflaufen des Spreizkörpers 2 verformt werden. Auch diese Ausführung ergibt somit ein weiches Auflaufen des Spreizkörpers 2 an der Spreizhülse 21.

## Patentansprüche

1. Spreizdübel mit einer einen vom vorderen Ende (1a, 11a, 21a) her längsgeschlitzten Bereich aufweisenden Spreizhülse (1, 11, 21) und einem vom vorderen Ende (1a, 11a, 21a) her in diesen Bereich einziehbaren, kegelstumpfförmigen Spreizkörper (2), wobei die Spreizhülse (1, 11, 21) eine ihre Länge durchsetzende Bohrung (1c, 11c, 21,) aufweist, die sich innerhalb des geschlitzten Bereiches entsprechend dem Spreizkörper (1, 11, 21) zum vorderen Ende (1a, 11, 21,) hin konisch erweitert, **dadurch gekennzeichnet,** dass sich innerhalb des geschlitzten Bereiches, anschliessend an die konische Erweite-

rung (1e, 11e, 21e) zum rückwärtigen Ende (1b, 11b, 21b) hin ein zylindrischer Bohrungsbereich (1f, 11f, 21f) anschliesst, dessen Durchmesser dem kleinsten Durchmesser der konischen Erweiterung (1e, 11e, 21e) entspricht und den Durchmesser des verbleibenden rückwärtigen Teiles der Bohrung (1c, 11c, 21c) der Spreizhülse (1, 11, 21) übersteigt.

2. Spreizdübel nach Anspruch 1, dadurch gekennzeichnet, dass der Uebergang vom zylindrischen Bohrungsbereich (1f, 11f, 21f) zum verbleibenden rückwärtigen Teil der Bohrung (1c, 11c, 21c) der Spreizhülse (1, 11, 21) als Anschlagschulter (1g, 11g, 21g) für den Spreizkörper (2) ausgebildet ist.

3. Spreizdübel nach Anspruch 2, dadurch gekennzeichnet, dass die Anschlagschulter (1g) im wesentlichen senkrecht zur Dübellängsachse verläuft.

4. Spreizdübel nach Anspruch 2, dadurch gekennzeichnet, dass die Anschlagschulter (11g) konkav gekrümmt ausgebildet ist.

5. Spreizdübel nach Anspruch 2, dadurch gekennzeichnet, dass die Anschlagschulter (21g) zur Dübellängsachse geneigt verläuft.

6. Spreizdübel nach einem der Ansprüche 1 bis 5, dadurch gekennzeichnet, dass die Länge der konischen Erweiterung (1e) der Spreizhülse (1) im wesentlichen der Länge des kegelstumpfförmigen Spreizkörpers (2) entspricht.

7. Spreizdübel nach einem der Ansprüche 1 bis 6, dadurch gekennzeichnet, dass die Länge des zylindrischen Bohrungsbereiches (1f) im wesentlichen der Länge des kegelstumpfförmigen Spreizkörpers (2) entspricht.

## Revendications

1. Cheville à expansion comprenant une douille expansible (1, 11, 21) présentant une section fendue dans le sens longitudinal à partir de l'extrémité antérieure (1a, 11a, 21a), et un élément d'écartement (2) de forme tronconique pouvant être inséré dans cette section à partir de l'extrémité antérieure (1a, 11a, 21a), la douille expansible (1, 11, 21) présentant un alésage (1c, 11c, 21c) qui la traverse dans le sens de sa longueur et qui, à l'intérieur de la section fendue, s'élargit de manière conique en direction de l'extrémité antérieure (1a, 11a, 21a), conformément à l'élément d'écartement (2), caractérisée en ce que, à l'intérieur de la section fendue, une section d'alésage cylindrique (1f, 11f, 21f) fait suite à l'élargissement conique (1e, 11e, 21e) en direction de l'extrémité postérieure (1b, 11b, 21b), dont le diamètre correspond au diamètre minimum de l'élargissement conique (1e, 11e, 21e) et dépasse le diamètre de la partie arrière restante de l'alésage (1c, 11c, 21c) de la douille expansible (1, 11, 21).

2. Cheville à expansion selon la revendication 1, caractérisée en ce que la transition de la section d'alésage cylindrique (1f, 11f, 21f) à la partie arrière restante de l'alésage (1c, 11c, 21c) de la douille expansible (1, 11, 21) est conformée en épaulement d'arrêt (1g, 11g, 21g) pour l'élément d'écartement (2).

3. Cheville à expansion selon la revendication 2, caractérisée en ce que l'épaulement d'arrêt (1g) s'étend sensiblement perpendiculairement à l'axe longitudinal de la cheville.

4. Cheville à expansion selon la revendication 2, caractérisée en ce que l'épaulement d'arrêt (11g) présente une forme concave.

5. Cheville à expansion selon la revendication 2, caractérisée en ce que l'épaulement d'arrêt (21g) est incliné par rapport à l'axe longitudinal de la cheville.

6. Cheville à expansion selon l'une des revendications 1 à 5, caractérisée en ce que la longueur de l'élargissement conique (1e) de la douille expansible (1) correspond sensiblement à la longueur de l'élément d'écartement (2) de forme tronconique.

7. Cheville à expansion selon l'une des revendications 1 à 6, caractérisée en ce que la longueur de la section d'alésage cylindrique (1f) correspond sensiblement à la longueur de l'élément d'écartement (2) de forme tronconique.

## Claims

1. An expansible dowel comprising an expansible sleeve (1, 11, 21) having a region which is longitudinally slotted from the front end (1a, 11a, 21a) and a frustoconical expansion body (2) which can be drawn-in from the front end (1a, 11a, 21a) into this region, the expansible sleeve (1, 11, 21) having a bore (1c, 11c, 21c) which penetrates its length and which within the slotted region widens conically towards the front end (1a, 11a, 21a) in accordance with the expansion body (1, 11, 21), characterised in that within the slotted region, adjacent to the conical widening (1e, 11e, 21e) towards the rearward end (1b, 11b, 21b), there adjoins a cylindrical bore region (1f, 11f, 21f), the diameter of which corresponds to the smallest diameter of the conical widening (1e, 11e, 21e) and exceeds the diameter of the remaining rearward part of the bore (1c, 11c, 21c) of the expansible sleeve (1, 11, 21).

2. An expansible dowel according to claim 1, characterised in that the transition from the cylindrical bore region (1f, 11f, 21f) to the remaining rearward part of the bore (1c, 11c, 21c) of the expansible sleeve (1, 11, 21) is designed as a stop shoulder (1g, 11g, 21g) for the expansion body (2).

3. An expansible sleeve according to claim 2, characterised in that the stop shoulder (1g) extends substantially perpendicular to the longitudinal axis of the dowel.

4. An expansible dowel according to claim 2, characterised in that the stop shoulder (11g) is concavely curved in design.

5. An expansible dowel according to claim 2, characterised in that the stop shoulder (21g) extends inclined to the longitudinal axis of the dowel.

6. An expansible dowel according to one of claims 1 to 5, characterised in that the length of the conical widening (1e) of the expansible sleeve (1) corresponds substantially to the length of the frustoconical expansion body (2).

7. An expansible dowel according to one of claims 1 to 6, characterised in that the length of the cylindrical bore region (1f) corresponds substantially to the length of the frustoconical expansion body (2).

Fig. 1

Fig. 2

Fig. 3

EP 0 295 201 B1

*Fig. 4*

*Fig. 5*

*Fig. 6*